# EUROPÄISCHE PATENTANMELDUNG

(11) **EP 2 700 329 A1**
(43) Veröffentlichungstag der Anmeldung: **26.02.2014**
(21) Anmeldenummer: 13180564.0
(22) Anmeldetag: 15.08.2013
(51) Int. Cl.: A45D 42/00, A45D 42/16, F16M 11/08, F16M 11/10, F16M 11/20, A45D 42/10

(54) **Spiegelanordnung mit einem an einem Schwenkarm gelenkig angeschlossenen Spiegel**

(30) Priorität: 23.08.2012 DE 202012103193 U; 24.08.2012 DE 202012103216 U
(71) Anmelder: Keuco GmbH & Co. KG, D-58675 Hemer (DE)
(72) Erfinder: Sadowski, Olaf, 58638 Iserlohn (DE)
(74) Vertreter: Dantz, Jan Henning

(57) **Zusammenfassung**

Eine Spiegelanordnung (1) mit einem an einem Schwenkarm (2) gelenkig angeschlossenen Spiegel (3), insbesondere einem Kosmetikspiegel, wobei der Schwenkarm (2) um eine horizontal verlaufende Schwenkachse eines Scharniers (4) schwenkbar an einer ortsfesten Halterung (5) oder an einem zweiten Schwenkarm (2) angeschlossen ist, welcher seinerseits um eine horizontal verlaufende Schwenkachse eines zweiten Scharniers (4) schwenkbar an einer ortsfesten Halterung oder an mindestens einem weiteren Schwenkarm (2) angeschlossen ist, wobei der jeweils am weitesten vom Spiegel (3) entfernte Schwenkarm (2) um eine horizontal verlaufende Schwenkachse eines Scharniers (4) schwenkbar an einer ortsfesten Halterung (5) angeschlossen ist, wobei jedes Scharnier (4) mit einer Bremse ausgestattet ist, deren Bremsmoment größer ist als das auf jedes Scharnier (4) einwirkende, schwerkraftabhängige Verschwenkmoment.

## Beschreibung

Spiegelanordnung mit einem an einem Schwenkarm gelenkig angeschlossenen Spiegel, insbesondere einem Kosmetikspiegel, wobei der Schwenkarm um eine horizontal verlaufende Schwenkachse eines Scharniers schwenkbar an einer ortsfesten Halterung oder an einem zweiten Schwenkarm angeschlossen ist, welcher seinerseits um eine horizontal verlaufende Schwenkachse eines zweiten Scharniers schwenkbar an einer ortsfesten Halterung oder an mindestens einem weiteren Schwenkarm angeschlossen ist, wobei der jeweils am weitesten vom Spiegel entfernte Schwenkarm um eine horizontal verlaufende Schwenkachse eines Scharniers schwenkbar an einer ortsfesten Halterung angeschlossen ist.

Spiegelanordnungen der gattungsgemäßen Art, insbesondere solche mit einem Kosmetikspiegel, dienen insbesondere dazu, den Spiegel oder einen Kosmetikspiegel in eine für einen Nutzer aus seiner Sicht optimalen Position verschwenken zu können, wobei angestrebt wird, dass jede mögliche Einstellposition sich nicht selbstständig verändern kann.

Insbesondere dann, wenn eine Schwenkung um eine horizontal verlaufende Schwenkachse vorgesehen ist, besteht immer die Gefahr, dass sich eine voreingestellte Position des Spiegels oder des Kosmetikspiegels ungewollt verändern kann, so dass der Benutzter gezwungen ist, erneute Verschwenkungen vorzunehmen.

Der vorliegenden Erfindung liegt die Aufgabe zugrunde, eine Spiegelanordnung der gattungsgemäßen Art zu schaffen, die eine selbsttätige Verschwenkung des Spiegels oder Kosmetikspiegels praktisch ausschließt, insgesamt kostengünstig herstellbar und darüber hinaus auch noch in einem gefälligen Design herstellbar ist.

Diese Aufgabe wird erfindungsgemäß dadurch gelöst, dass jedes Scharnier mit horizontal verlaufender Schwenkachse mit einer Bremse ausgestattet ist, deren Bremsmoment größer ist als das auf jedes Scharnier einwirkende, schwerkraftabhängige Verschwenkmoment.

Der Vorteil einer derartigen Spiegelanordnung ist zunächst einmal vorrangig darin zu sehen, dass der Spiegel oder der Kosmetikspiegel in jeder beliebigen Schwenkposition stehen bleibt und sich nicht selbsttätig verstellen kann, ohne dass der Benutzter nach der gewünschten Einstellung irgendwelche Feststellmanipulationen wie Anziehen von Klemmschrauben ausführen muss.

Ein weiterer Vorteil der Erfindung ist darin zu sehen, dass Scharniere mit entsprechend gestalteten Bremsen relativ zierlich und elegant in entsprechende Konstruktionen eingebaut werden können, so dass auch eine optisch gefällige Gesamtkonstruktion einer derartigen Spiegelanordnung möglich ist, was dem Konstrukteur ebenso wie dem Designer weitgehende Gestaltungsfreiheiten bietet.

Geeignete Scharniere für eine entsprechende Spiegelanordnung werden im Folgenden noch näher erläutert und sind Gegenstand von Unteransprüchen. Weitere Unteransprüche befassen sich mit der weiteren Gestaltung der Spiegelanordnung, hier insbesondere im Bereich der Anbindung des Spiegels oder des Kosmetikspiegels unmittelbar am Schwenkarm.

Ausführungsbeispiele der Erfindung sind in den beigefügten Zeichnungen dargestellt und werden im Folgenden näher beschrieben. Es zeigen:
- Figur 1: eine erfindungsgemäße Spiegelanordnung in einer möglichen Verschwenkposition eines Spiegels;
- Figur 2: eine der Figur 1 entsprechende Perspektivdarstellung mit sprengbildlich dargestellten Scharnierbereichen;
- Figur 3: eine weitere Perspektivdarstellung der Spiegelanordnung gemäß den Figuren 1 und 2 mit einer detaillierten Sprengbilddarstellung eines Scharnierbereiches;
- Figur 4: eine der Figur 3 entsprechende Darstellung einer Spiegelanordnung nach einem weiteren Ausführungsbeispiel der Erfindung;
- Figur 5: eine der Figur 4 entsprechende Darstellung einer Spiegelanordnung nach einem weiteren Ausführungsbeispiel der Erfindung;
- Figur 6: eine perspektivische Teildarstellung der Spiegelanordnung von der Rückseite des Spiegels her gesehen;
- Figur 7: eine perspektivische Darstellung einer Spiegelanordnung nach einem weiteren Ausführungsbeispiel der Erfindung

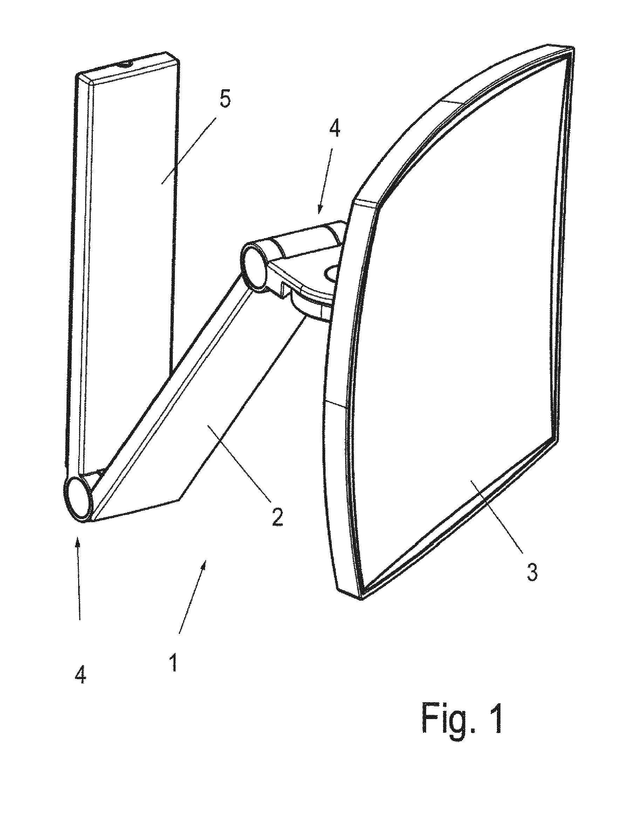

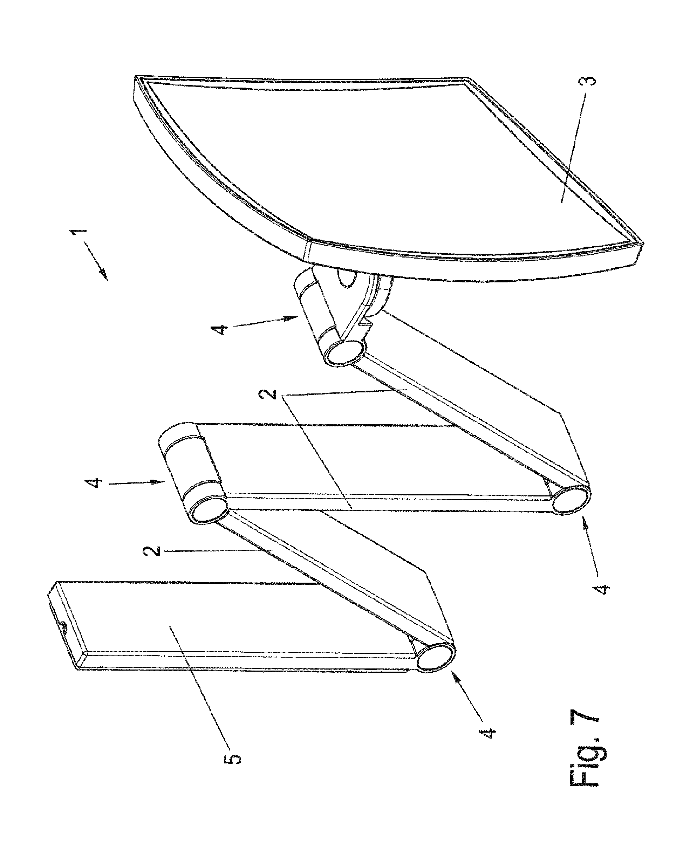

In den Zeichnungen ist mit dem Bezugszeichen 1 generell eine Spiegelanordnung bezeichnet, wobei es sich um eine Spiegelanordnung 1 mit einem an einem Schwenkarm 2 gelenkig angeschlossenen Spiegel 3, insbesondere einem Kosmetikspiegel handelt, wobei der Schwenkarm 2 um eine horizontal verlaufende Schwenkachse eines Scharniers 4 an einer ortsfesten Halterung 5 (Figuren 1 bis 5) oder an einem zweiten Schwenkarm 2 angeschlossen ist, welcher seinerseits um eine horizontal verlaufende Schwenkachse eines zweiten Scharniers 4 schwenkbar an einem weiteren Schwenkarm 2 angeschlossen ist, welch letzterer wiederum über ein Scharnier 4 mit horizontal verlaufender Schwenkachse an einer ortsfesten Halterung 5 angeschlossen ist, so wie dies in Figur 7 beispielhaft dargestellt ist. Abweichend vom in Figur 7 dargestellten Ausführungsbeispiel kann der zweite Scharnierarm 2 aber auch direkt an einer ortsfesten Halterung 5 schwenkbar angeschlossen sein.

Die Ausführungsbeispiele sollen insoweit nur darstellen und verdeutlichen, dass der Spiegel 3, insbesondere ein Kosmetikspiegel, über einen oder mehrere Schwenkarme, die letztendlich an einer ortsfesten Halterung 5 angeschlossen sind, gehalten werden kann.

Es wurde schon mehrfach darauf hingewiesen, dass alle Scharniere 4 zwischen den einzelnen Schwenkarmen 2 und der ortsfesten Halterung 5 horizontal verlaufende Schwenkachsen aufweisen. Unter dem Begriff "Schwenkachse" ist jeweils die gedachte Mittel-Längsachse der Scharniere 4 zu verstehen.

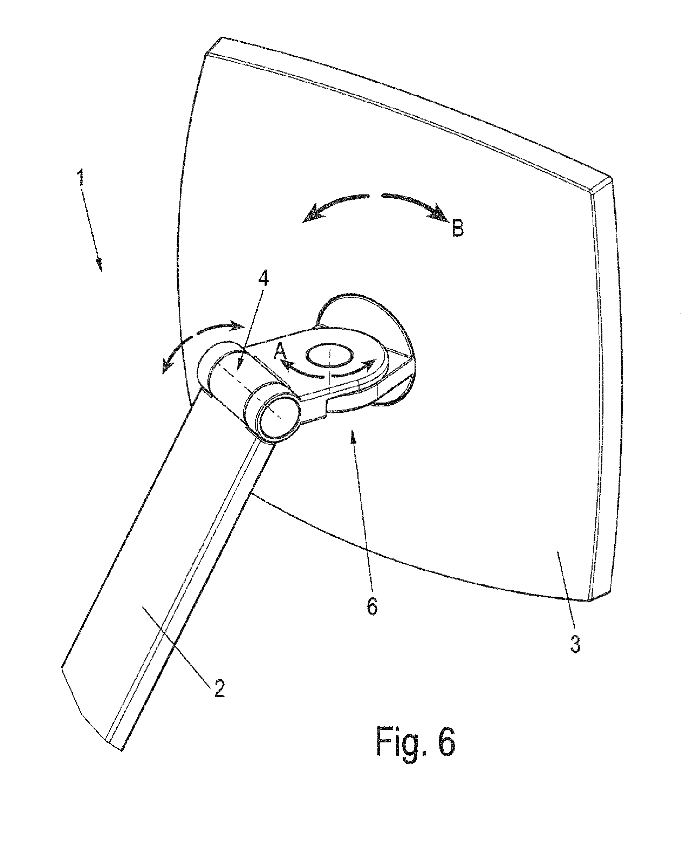

Wie insbesondere Figur 6 deutlich macht, ist der Spiegel 3 an seiner Rückseite über einen Montagekopf 6 mit dem Schwenkarm 2 verbunden, und zwar über ein Scharnier 4 mit horizontal verlaufender Schwenkachse. Der Montagekopf 6 ist so gestaltet, dass der Spiegel 3 um eine vertikal verlaufende Achse gegenüber dem Montagekopf 6 verschwenkbar ist und darüber hinaus auch noch eine Verdrehung des Spiegels 3 gegenüber dem Montagekopf 6 im Sinne einer Links- oder Rechts-Schwenkung ermöglicht ist, wie dies durch die Pfeile A und B in Figur 6 angedeutet ist. Somit ist zunächst einmal deutlich gemacht, dass der Spiegel 3, insbesondere ein Kosmetikspiegel, von einem Benutzer aus einer Nichtgebrauchsstellung heraus, in der sich alle Schwenkarme 2 in einer parallel zur ortsfesten Halterung 5 verlaufenden Stellung befinden, in eine Gebrauchsstellung bewegt werden kann, die für die Position des jeweiligen Benutzers als besonders angenehm und zweckmäßig angesehen wird.

Der Spiegel 3 kann von der ortsfesten Halterung 5 in Richtung eines Benutzers vorgezogen und nach unten oder nach oben geschwenkt werden. Außerdem kann der Spiegel 3 gegenüber dem ersten Schwenkarm 2 um eine vertikale Achse verschwenkt und darüber hinaus auch noch um eine weitere Achse im Sinne einer Links- oder Rechts-Drehung verdreht werden.

Der wesentliche Gedanke der vorliegenden Erfindung ist darin zu sehen, dass alle mit horizontal verlaufenden Schwenkachsen versehenen Scharniere 4 mit Bremsen ausgestattet sind, deren Bremsmoment jeweils größer ist, als das auf jedes Scharnier einwirkende, schwerkraftabhängige Verschwenkmoment.

Damit ist es möglich, ohne weiteres die oben beschriebenen Verschwenkpositionen des Spiegels 3 herbei zu führen, ohne dass es für den Benutzer notwendig wird, die jeweils eingenommene Verschwenkposition durch eine weitere Manipulation zu fixieren. Der Spiegel 3 bleibt durch die Bremswirkung innerhalb der Scharniere 4 in jeder voreingenommenen Verschwenkposition stehen, sofern nicht durch äußere Kräfte, die vom Benutzter bewusst aufgebracht werden, eine weitere oder erneute Verschwenkung herbeigeführt wird.

Da vom Benutzer zu bedienende Feststellelemente völlig erübrigt sind, kann die Gesamtanordnung äußerst platzsparend und optisch gefällig ausgelegt werden.

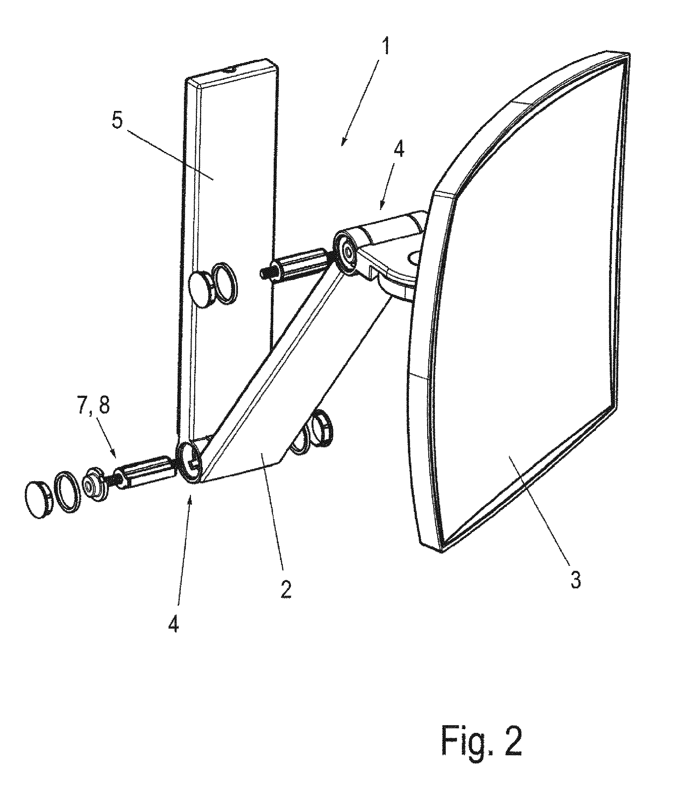

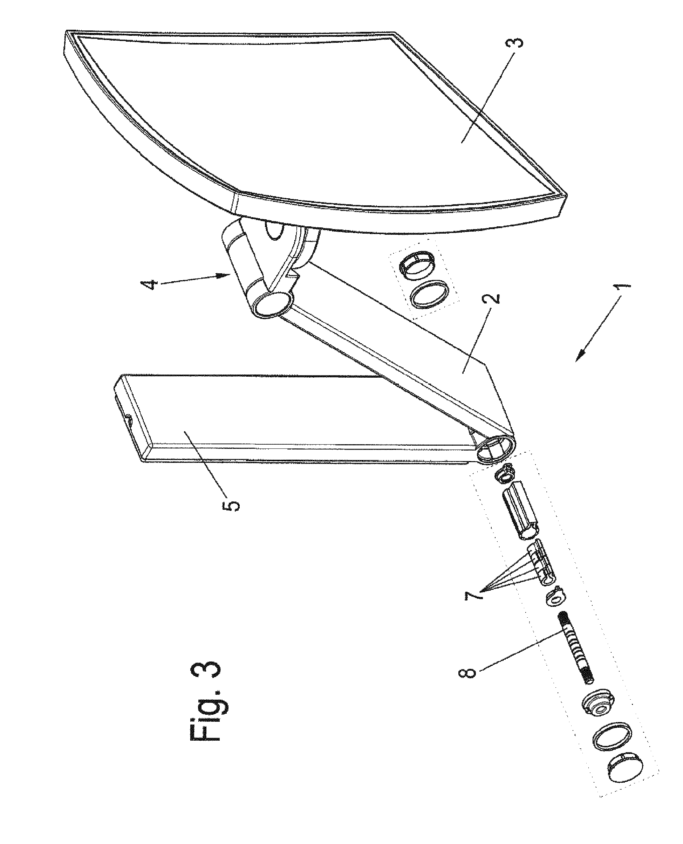

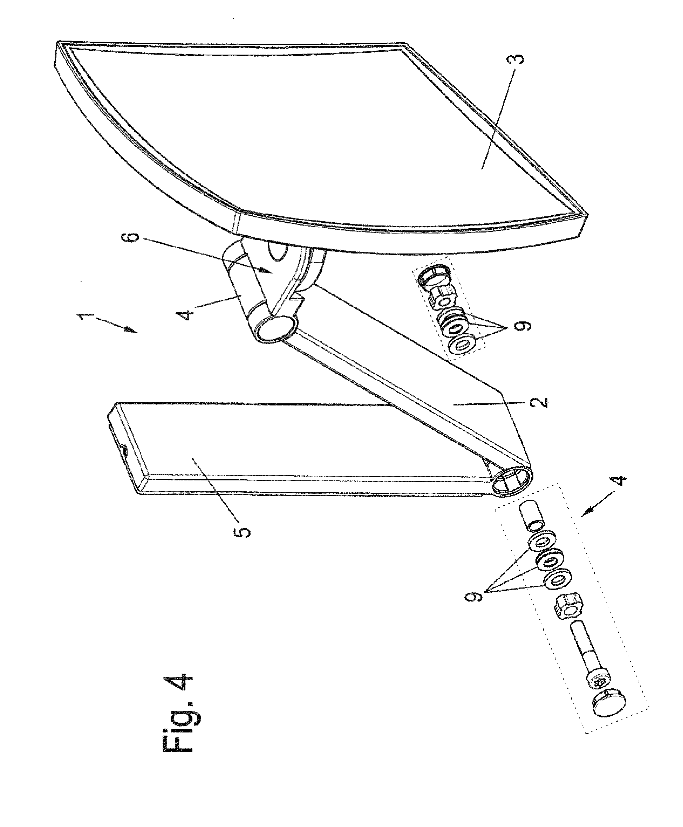

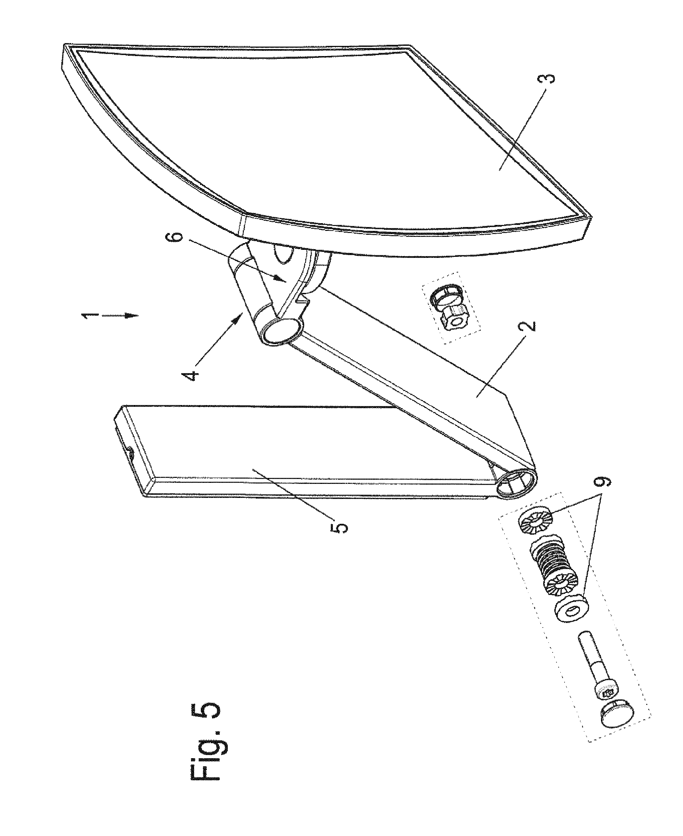

In den Figuren 2 und 3 sowie 4 und 5 sind Beispiele für die Ausgestaltung eines Scharniers 4 mit einer Bremse gezeigt. Dabei sei vorab darauf hingewiesen, dass entsprechende Bremsen an sich bekannter Stand der Technik sind, so dass auf eine detaillierte Beschreibung der entsprechenden Bremsen durchaus verzichtet werden kann. Es soll lediglich verdeutlicht werden, dass es sich bei den Bremsen um bekannte Konstruktionen handelt, bei denen entweder, wie im Ausführungsbeispiel nach den Figuren 2 und 3, radial wirkende Bremsmittel 7 vorgesehen sein können, die auf eine Achse 8 einwirken oder, wie in den Ausführungsbeispielen nach den Figuren 4 und 5, um axial belastete Bremsmittel 9 in Form von Bremsscheiben handeln kann, die durch axiales Anpressen an einen Bremskörper ihre Wirkung erzielen.

Über die dargestellten Ausführungsbeispiele hinausgehend sind selbstverständlich auch andere, hier nicht genannte Bremsen einsetzbar, immer unter der Voraussetzung, dass durch die entsprechenden bekannten Bremsen ein Bremsmoment dauerhaft voreinstellbar ist, welches größer ist als das auf jedes Scharnier 4 einwirkende, schwerkraftabhängige Verschwenkmoment.

Die ortsfeste Halterung 5 dient in erster Linie dazu, die gesamte Spiegelanordnung 1 beispielsweise an einer Gebäudewandung fest zu montieren. Denkbar ist es aber auch, die Spiegelanordnung 1 über die ortsfeste Halterung 5 an einer gebäudeunabhängigen Tragsäule oder Tragwand zu fixieren.

Darüber hinaus ist die ortsfeste Halterung 5 hervorragend dazu geeignet, elektrische oder elektronische Baugruppen aufzunehmen, die für die möglicherweise erwünschte Beleuchtung des Spiegels 3 benötigt werden.

Bevorzugt sind die Schwenkarme 2 aus Hohlprofilen gefertigt, so dass durch diese Schwenkarme 2 auch elektrische Zuleitungen zu einer Beleuchtungseinrichtung des Spiegels 3 hindurchgeführt werden können.

### Bezugszeichenliste

- 1: Spiegelanordnung
- 2: Schwenkarm
- 3: Spiegel
- 4: Scharnier
- 5: Halterung
- 6: Montageplatte
- 7: Bremsmittel
- 8: Achse
- 9: Bremsmittel

## Patentansprüche

1. Spiegelanordnung (1) mit einem an einem Schwenkarm (2) gelenkig angeschlossenen Spiegel (3), insbesondere einem Kosmetikspiegel, wobei der Schwenkarm (2) um eine horizontal verlaufende Schwenkachse eines Scharniers (4) schwenkbar an einer ortsfesten Halterung (5) oder an einem zweiten Schwenkarm (2) angeschlossen ist, welcher seinerseits um eine horizontal verlaufende Schwenkachse eines zweiten Scharniers (4) schwenkbar an einer ortsfesten Halterung oder an mindestens einem weiteren Schwenkarm (2) angeschlossen ist, wobei der jeweils am weitesten vom Spiegel (3) entfernte Schwenkarm (2) um eine horizontal verlaufende Schwenkachse eines Scharniers (4) schwenkbar an einer ortsfesten Halterung (5) angeschlossen ist, **dadurch gekennzeichnet, dass** jedes Scharnier (4) mit einer Bremse ausgestattet ist, deren Bremsmoment größer ist als das auf jedes Scharnier (4) einwirkende, schwerkraftabhängige Verschwenkmoment.

2. Spiegelanordnung nach Anspruch 1, **dadurch gekennzeichnet, dass** jede Bremse radial wirkende Bremsmittel (7) oder axial wirkende Bremsmittel (9) aufweist.

3. Spiegelanordnung nach Anspruch 1 oder 2, **dadurch gekennzeichnet, dass** der Spiegel (3) mit dem ersten Schwenkarm (2) über eine Montageplatte (6) um ein Scharnier (4) mit horizontaler Schwenkachse schwenkbar verbunden ist.

4. Spiegelanordnung nach Anspruch 3, **dadurch gekennzeichnet, dass** der Spiegel (3) gegenüber der Montageplatte (6) um eine vertikale Achse verschwenkbar und über eine Drehachse im Sinne einer Links- oder Rechts-Drehung verdrehbar ist.

5. Spiegelanordnung nach einem der vorhergehenden Ansprüche, **dadurch gekennzeichnet, dass** die Schwenkarme (2) aus Hohlprofilen bestehen.

6. Spiegelanordnung nach einem der vorhergehenden Ansprüche, **dadurch gekennzeichnet, dass** die ortsfeste Halterung (5) als Aufnahmegehäuse für elektrische oder elektronische Bauteile für eine Beleuchtung des Spiegels (3) ausgebildet ist.
